# EUROPEAN PATENT APPLICATION

(11) **EP 2 589 617 A2**
(43) Date of publication of application: **08.05.2013**
(21) Application number: 13000447.6
(22) Date of filing: 30.11.2009
(51) Int. Cl.: C08G 77/54, C08G 77/38, C08G 65/18, C08G 65/32, C08L 83/08, C08L 83/14

(54) **Non-crosslinked reaction product of an epoxy or oxetane compound and an amino siloxane**

(30) Priority: 30.11.2009 US 627253
(62) Divisional of application: 09768569.7
(71) Applicant: Momentive Performance Materials Inc., Albany, NY 12211 (US)
(72) Inventor: Koczo, Kalman, Suffern, NY 10901 (US); Falk, Benjamin, Yorktown Heights, NY 10598 (US); Palumbo, Antonio, Siracusa (IT); Phukan, Monjit, Bangalore (IN)
(74) Representative: Zinnecker, Armin

(57) **Abstract**

The present invention provides for a composition comprising the reaction product of an oxirane or oxetane compound (I) comprising at least two oxirane or oxetane groups; a compound (II) comprising silicon and one or more amino groups; and optionally a polyamine (III) ; and a secondary amine (IV).

## Description

### FIELD OF THE INVENTION

The present invention relates to non-crosslinked copolymers of epoxy compounds and amino silicones and processes for their preparation.

### BACKGROUND OF THE INVENTION

Modified silicones can exhibit a variety of physical properties. The polymers can be modified to be hydrophilic, lipophilic and hydrophobic depending on the nature of the organic substituents. Recently ,linear alternating copolymers and linear random copolymers have been made using alkyl or polyether, and polydiméthylsiloxane units. These materials have shown unexpected and superior properties as demulsifying agents, in particular, as demulsifying agents used in the processing of crude-oil mixtures as well as other commercial products.

### SUMMARY OF THE INVENION

According to the invention, there is provided a non-crosslinked composition comprising the reaction product of
I) an oxirane or oxetane compound (I) comprising at least two oxirane or oxetane groups;
II) a compound (II) comprising silicon and one or more amino groups; and optionally
III) a polyamine (III); and
IV) a secondary amine(IV).

According to the invention, there is further provided non-crosslinked reaction product compositions wherein the oxirane or oxetane compound (I) is selected from the group consisting of siloxanes, silanes, hydrocarbons and polyethers particularly where the oxirane or oxetane compound is a siloxane having the formula:

MₐM^{E}_{b}M^{PE}_{c}M^{H}_{d}D^{E}_{f}D^{PE}_{g}D^{H}ₕTᵢT^{E}ⱼT^{PE}ₖT^{H}ⱼQₘ

with
M = R¹R²SiO_{1/2};
M^{H} = R¹R²HSiO_{1/2};
M^{PE} = R¹R²(-CH₂CH(R⁴(R⁵)ₙO(C₂H₄O)ₒ(C₃H₆O)ₚ(C₄H₈O)_{q}R⁶)SiO_{1/2};
M^{E} = R¹R²(R^{E})SiO_{1/2};
D = R¹R²SiO_{2/2}; and
D^{H} = R¹HSiO_{2/2};
D^{PE} = R¹(-CH₂CH(R⁴(R⁵)ₙO(C₂H₄O)ₒ(C₃H₆O)ₚ(C₄H₈O)_{q}R⁶)SiO_{2/2};
D^{E} = R¹R^{E}SiO_{2/2};
T = R¹SiO_{3/2};
T^{H} = HSiO_{3/2};
T^{PE} = (-CH₂CH(R⁴(R⁵)ₙO(C₂H₄O)ₒ(C₃H₆O)ₚ(C₄H₈O)_{q}R⁶)SiO_{3/2};
T^{E}=R^{E}SiO_{3/2}; and
Q=SiO_{4/2}:
where *R¹, R² and R³ are each independently selected from the group of monovalent hydrocarbon radicals having from 1 to about 60 carbon atoms;
R⁴ is H or a 1 to about 6 carbon atom containing alkyl group; R⁵ is a divalent hydrocarbon radical of 1 to about 6 carbons; R⁶ is H, a monofunctional hydrocarbon radical of 1 to about 6 carbons, or acetyl;
R^{E} is independently a monovalent hydrocarbon radical containing one or more oxirane or oxetane moieties having from two to about sixty carbon atoms subject to the limitation that the oxirane or oxetane compound (I) contains at least two oxirane or oxetane groups;
the subscript *a* is 0. to about 20
the subscript *b* is 0 to about 20 subject to the limitation that (b + *f* + *j*) > 0;
the subscript *e* is 0 to about 1,000,
the subscript *f* is 0 to about 400 subject to the limitation that (b + *f* + *j*) > 0:
the subscript *i* is 0 to about 50;
the subscript *j* is 0 to about 30 subject to the limitation that (b + *f* + *j*) > 0;
the subscript *m* is 0 to about 20:
the subscript *c* is 0 to about 20;
the subscript *g* is 0 to about 200;
the subscript *k* is 0 to about 30;
the subscript *d* is 0 to about 20;
the subscripts *h*, is 0 to about 20:
the subscript *l* is 0 to about 30;
the subscript *n* is zero or one;
the subscript *o* is 0 to about 100 subject to the limitation that *(*o + *p + q*)> 0;
the subscript *p* is 0 to about 100 subject to the limitation that (*o* +*p* + *q*) > 0;
the subscript *q* is 0 to about 100 subject to the limitation that (*o* + *p* + *q*) > 0;
or alternatively where the oxirane or oxetane compound (I) has the formula:

   (R⁷)ᵣ(R³)ₛ₍R⁹)ᵢ(R¹⁰)ₐ
where R⁷ and R¹⁰ are independently a monovalent hydrocarbon radical containing one or more oxirane or oxetane moieties having from 2 to about 12 carbon atoms;
R⁸ and R⁹ are each selected from the group consisting of H or a linear or branched monovalent hydrocarbon radical of 1 to about 200 carbons: optionally substituted with nitrogen, sulphur and oxygen;
the subscripts *r*, *s*, *t*, *u* are independently between zero to about 10 subject to the limitation that (*r* + *u*) ≥ 2
or alternatively where the oxirane or oxetane compound (I) is a polyether having the formula:

   R¹²O(C₂H₄O)_{w}(C₃H₆O)ₓ(C₄H₈O)_{y}R¹³
where R¹² and R¹³ are independently a monovalent hydrocarbon radical containing one or more oxirane or oxetane moieties having from 2 to about 12 carbon atoms,
the subscript *w* is 0 to about 100 subject to the limitation that (*w* + *x* + *y*) > 0;
the subscript *x* is 0 to about 100 subject to the limitation that (*w* + *x* + *y*) > 0;
the subscript *y* is 0 to about 100 subject to the limitation that (*w* + *x* + *y*) > 0.
According to still another aspect of the present invention further provides non-crosslinked reaction product compositions where compound (II) comprising silicon and one or more amino groups is selected from the group consisting of siloxanes and silanes having the formula:

MₐₐM^{A}_{bb}ME^{PE}_{cc}M^{H}_{cd}M^{M}ₑₑD_{ff}D^{A}_{gg}D^{PE}ₕₕD^{H}ₜₕD^{H}ᵢᵢTⱼⱼT^{A}ₖₖT^{PE}ᵢᵢT^{H}ₘₘQₙₙ with

M = R¹⁵R¹⁶R¹⁷SiO_{1/2};
M^{H} = R¹⁵R¹⁶H SiO_{1/2};
M^{PE} =R¹⁵R¹⁶(-CH₂CH(R¹⁸)(R¹⁹)ₒₒO(C₂H₄O)ₚₚ(C₃H₆O)_{qq}(C₄H₈O)ₙR²⁰)SiO_{1/2};
M^{A} = R¹⁵R¹⁶(R^{A})SiO_{1/2};
M^{M} = R¹⁵R¹⁶R¹⁷R^{A}Si;
D = R¹⁵R¹⁶SiO_{2/2;}
D^{H} = R¹⁵HSiO_{2/2};
D^{PE} = R¹⁵(-CH₂CH(R¹⁸)(R¹⁹)ₒₒO(C₂H₄O)ₚₚ(C₃H₆O)_{qq}(C₄H₈O)ₙR²⁰)SiO_{2/2};
D^{A} = R¹⁵R^{A}SiO_{2/2};
T = R¹⁵SiO_{3/2}
T^{H} = HSiO_{3/2};
T^{PE} = (-CH₂CH(R¹⁸)(R¹⁹)ₒₒ(C₂H₄O)ₚₚ(C₃H₆O)_{qq}(C₄H₆O)ₘR²⁰)SiO_{3/2};
T^{A} - R^{A}SiO_{3/2}; and
Q=SiO_{4/2};
where R¹⁵, R¹⁶ and R¹⁷ are each independently selected from the group of monovalent hydrocarbon radicals having from 1 to about 60 carbon atoms; R¹⁸ is H or a 1 to about 6 carbon atom alkyl group; R¹⁹ is a divalent hydrocarbon radical of 1 to about 6 carbons; R²⁰ is selected from the group consisting of H, monofunctional hydrocarbon radicals of to about 6 carbon, and acetyl;
R^{A} is independently a monavalent hydrocarbon radical containing one or more amino moieties having from one to about sixty carbon atoms;
the subscript aa is 0 to about 20;
the subscript *bb* is 0 to about 20 subject to the limitations that the sum of the subscripts *bb*, *ee, gg* and *kk* is greater than zero;
the subscript *ee* is zero or subject to the limitation that when ee is 1 then all the subscripts *aa*, *bb, cc, dd, ff, gg, hh, ii, jj,* kk, *ll, mm* and *nn* are zero;
the subscript *ff* is 0 to about 1,000;
the subscript *gg* is 0 to about 400 subject to the limitation that the sum of the subscripts *bb*, *ee*, gg and *kk* is greater than zero;
the subscript *jj* is 0 to about 50;
the subscript *kk* is 0 to about 30 subject to the limitation that the sum of the subscripts *bb, gg* and *kk* is greater than 1:
the subscript *nn* is 0 to about 20;
the subscript *cc* is 0 to about 20;
the subscript *hh* is 0 to about 200;
the subscript *ll* is 0 to about 30;
the subscript *dd* is 0 to about 2;
the subscript *ii* is 0 to about 20;
the subscript *mm* is 0 to about 30;
the subscript *oo* is zero or one;
the subscript *pp* is 0 to about 100 subject to the imitation that (*pp* + *qq* + *rr)* > 0:
the subsciript *qq* is 0 to about 100 subject to the limitation that (*pp + qq* + *rr*) > 0;
the subscript *rr* is 0 to about 100 subject to the limitation that (*pp* + *qq* + *rr*) >0.
Optionally the reaction of compound (I) with compound (II) can be conducted in the presence of compound (III) comprising a polyamine having the formula:

N(R²¹) (R²²)A[N(R²³)(R²⁴)]_{zz}

where
R²¹, R²², F²³ and R²⁴ are independently chosen from the group consisting of H or a monovalent hydrocarbon radical containing one 1 to about 20 carbon atoms;
A is selected from a group consisting of a divalent linear or branched hydrocarbon radical consisting of about 1 to about 60 carbons or a bivalent polydialkyl-siloxane radical, optionally containing S, O or N and the subscript zz is positive ad has a value ranging from about 1 to about 20.
The result will be a non-crosslinked reaction product of compound (I) with compound (II), and compound (III).

Optional the reaction of compound (I) with compound (II) can be conducted in the presence of compound (lV) comprising a secondary amine.

Examples of secondary amines are diethanolamine, dimethanolamine, diethylamine, dimethylamine, ethylmethylamine, dipropylamine, diisopropylamine, dibutylamine, dicyclohexylamine, diphenylamine piperidine, pyrrolidine phthalimide, 1,1,1,3,5,5,5-heptamethyl-3'-(methylaminopropyl)-trisiloxane, Methyl-(3-trimethyl the like, Polymeric amines may also be used as such.

The result will be a non-crosslinked reaction product of compound (I) with compound (II), and: compound (IV),

Optionally the reaction of compound (I) with compound (II) can be conducted in the presence of compound (III) and compound (IV). The result will be a non-crosslinked reaction product of compound (I) with compound (II). compound (III) and compound (IV).

Additional embodiments are also part of the present invention, which are further described in the Detailed Description of the Invention below.

### DETAILED DESCRIPTION OF THE INVENTION

According to the invention, there is provided a non-crosslinked composition comprising the reaction product of
I) an oxirane or oxetane compound (I) comprising at least two oxirane or oxetane groups.;
II) a compound (II) comprising silicon and one or more amino groups;
   and optionally
III) a polyamine (III); and
IV) a secondary amine (IV).

According to the invention, there is further provided non-crosslinked reaction product compositions wherein the oxirane or oxetane compound (I) is selected from the group consisting of siloxanes, silanes, hydrocarbons and polyethers particularly where the oxirane or oxetane compound is a siloxane having the formula:

MₐM^{E}_{b}M^{PE}_{c}M^{H}_{d}D^{E}_{f}D^{PE}_{g}D^{H}ₕTᵢT^{E}jT^{PE}ₖT^{H}ₗQₘ

with
M = R¹R²R³SiO_{1/2};
M^{H} = R₁R²H SiO_{1/2};
M^{PE} = R¹-(CH₂CH(R⁴)(R⁵)ₙO(C₂H₄O)ₚ(C₃H₆O)ₚ(C₄H₈O)_{q}R⁶)SiO_{1/2};
M^{E}=R¹R²(R^{E})SiO_{1/2};
D = R¹R²SiO_{2/2}; and
D^{H} = R¹HSiO_{2/2};
D^{PE} = R¹(-CH₂CH(R⁴(R⁵)ₙO(C₂H₄O)ₒ(C₃H₆O)ₚ(C₄H₈O)_{q}R⁶)SiO_{2/2};
D^{E} = R¹R^{E}SiO_{2/2};
T = R¹SiO_{3/2};
T^{H} = HSiO_{3/2};
T^{PE} = (-CH₂CH(R⁴(R⁵)ₙO(C₂H₄O)ₚ(C₃H₆O)ₚ(C₄H₈O)_{q}R⁶)SiO_{3/2};
T^{E} = R^{E}SiO_{3/2}; and
Q=SiO_{4/2};
where R¹, R² and R³ are each independently selected from the group of monovalent hydrocarbon radical having from 1 to about 60 carbon atoms;
R⁴ is H or a 1 to about 6 carbon atom containing alkyl group; R⁵ is a divalent hydrocarbon radical of 1 to about 6 carbons; R⁶ is H, a monofunctional hydrocarbon radical of 1 to about 6 carbons, or acetyl;
R^{E} is independently a monovalent hydrocarbon radical containing one or more oxirane or oxetane moieties having from about two to about sixty carbon atoms subject to the limitation that the oxirane or oxetane compound (I) contains at least two oxirane or oxetane groups;
the subscript a is 0 to about 20, 1 to about 20, preferably 0 to about 10, and more preferably 0 to about 5;
the subscript *b* is 0 to about 20, 1 to about 20, preferably 0 to about 10, and more preferably 0 to about 3 subjected the limitation that (*b*+*f*+*j*)>0;
the subscript *e* is 0 to about 1,000, 1 to about 1000, preferable 0 to about 500, and more preferably 0 to about 200:
the subscript *f* is 0 to about 400, 1 to about 400, preferably 0 to about 100, and more preferably 0 to about 20 subject to the limitation that (*b*+*f*+*j*)>0;
subscript *i* is 0 to about 50, 1 to about 50, Preferably 0 to about 10, and more Preferably 0 to about 5;
the subscript *j* is 0 to about 30, 1 to about 30, preferably 0 to about 10., and more preferably 0 to about 5 subject to the limitation that *(b*+*f*+*j*)>0:
the subscript *m* is 0 to about 20, 1 to about 20, preferably 0 to about 10. and more preferably 0 to about 7.5;
the subscript *c* is 0 to about 20, 1 to about 20, preferably 0 to about 15, and more preferably 0 to about 10;
the subscript *g* is 0 to about 200, 1 to about 200, preferably 0 to about 100, and more preferably 0 to about 50;
the subscript *k* is 0 to about 30, 1 to about 30, preferably 0 to about 20, and more preferably 0 to about 10;
the subscript *d* is 0 to about 20.1 to about 20, preferably 0 to about 10, and more preferable 0 to about 3;
the subscript *h* is 0 to about 20, 1 to about 20, preferably 0 to about 10, and more preferably 0 to about 3;
the subscript *l* is 0 to about 30, 1 to about 30, preferably 0 to about 10, and more preferably 0 to about 3;
the subscript *n* is zero or one;
the subscript *o* is 0 to about 100,1 to about 100, subject to the limitation that (*o* + *p* + *q*) > 0;
the subscript *p* is 0 to about 100, 1 to about 100, subject to the limitation that (*o* + *p* + *q*) > 0;
the subscript *q* is 0 to about 100, 1 to about 100, subject to the limitation that (*o* + *p* + *q*) > 0;
or alternatively where the oxirane or oxetane compound (I) has the formula:

   (R⁷)ᵣ(R⁸)ₛ(R⁹)ₜ(R¹⁰)ᵤ
where R⁷ and R¹⁰ are independently a monovalent hydrocarbon radical containing one or more oxirane or oxetane moieties having from about 2 to about 12 carbon atoms:
R⁸ and R⁹ are each selected from the group consisting of H or a linear or branched monovalent hydrocarbon radical of 1 to about 200 carbons; optionally substituted with nitrogen, sulphur and oxygen;
the subscripts *r, s, t, u* are zero or positive ranging from zero to about 10 subject to the imitation that (*r*+*u*) ≥2
or alternatively where the oxirane or oxetane compound (I) is a polyether having the formula:

   R¹²O(C₂H₄O)_{w}(C₃H₅O)ₓ(C₄H₈O)_{y}R¹³
where R¹² and R¹³ are independently a monovalent hydrocarbon radical containing one or more oxirane or oxetane moieties having from about 2 to about 12 carbon atoms;
the subscript *w* is 0 to about 100, 1 to about 100, subject to the limitation that (*w* + *x* + *y*) > 0;
the subscript x is 0 to about 100, 1 to about 100, subject to the limitation that (*w* + *x* + *y*) > 0;
the subscript y is 0 to about 100, 1 to about 100, subject to the limitation that (*w* + *x* + *y*) > 0.

According to still another aspect of the present invention further provides non-crosslinked reaction product compositions where compound (II) comprising silicon and one or more amino groups is selected from the group consisting of siloxanes and silanes having the formula:

MₐₐM^{A}_{bb}M^{PE}_{cc}M^{H}_{dd}M^{M}ₑₑD_{ff}D^{A}_{gg}D^{PE}ₕₕD^{H}ⱼⱼTⱼⱼT^{A}ₖₖT^{PE}ₘₘQₙₙ

with
M = R¹⁶R¹⁶R¹⁷SiO_{1/2}:
M^{H}= R¹⁵R¹⁶H SiO_{1/2};
M^{PE}=R¹⁵R¹⁶(-CH₂CH(R¹⁸)R¹⁹)ₒₒO(C₂H₄O)ₚₚ(C₃H₆O)_{qq}(C₄H₈O)ᵣᵣR²⁰)SiO_{1/2};
M^{A} = R¹⁵R¹⁵(R^{A})SiO_{1/2};
M^{M} = R¹⁵R¹⁶R¹⁷R^{A}Si;
D=R¹⁵R¹⁶SiO_{2/2};
D^{H}=R¹⁵HSiO_{2/2};
D^{PE}= R¹⁵(-CH₂CH(R¹⁸)(R¹⁹)ₒₒO(C₂H₄O)ₚₚ(C₃H₆O)ₚₚ(C₄H₈O)ᵣᵣR²⁰)SiO_{2/2};
D^{A}=R¹⁵R^{A}SiO_{2/2};
T=R¹⁵SiO_{2/2;}
T^{H}=HSiO_{3/2};
T^{PE}=(-CH₂CH(R¹⁸)(R¹⁹)ₒₒ(C₂H₄O)ₚₚ(C₃H₆O)_{qq}(C₄H₈O)ᵣᵣR²⁰)SiO_{3/2};
T^{A} = R^{A}SiO_{3/2}; and
Q = SiO_{4/2};
where R¹⁵, R¹⁶ and R¹⁷ are each independently selected from the group of monovalent hydrocarbon radicals having from 1 to about 60 carbon atoms;
R¹⁸ is H or a 1 to about 6 carbon atom alkyl group; R¹⁹ is a divalent hydrocarbon radical of 1 to about 6 carbons: R²⁰ is selected from the group consisting of H, monofunctional hydrocarbon radical of 1 to about 6 carbons, and acetyl;
R^{A} is independently a monovalent hydrocarbon radical containing one or more amino moieties having from one to about sixty carbon atoms;
the subscript aa is 0 to about 20, 1 to about 20, preferably 0 to about 10, and more preferably 0 to about 5;
the subscript *bb* is 0 to about 20, 1 to about 20, preferably 0 to about 10, and more preferably 0 to about 5 subject to the limitations that the sum of
the subscripts *bb ee, gg* and *kk* is greater than zero;
the subscript ee is zero or 1 subject to the limitation that when ee is 1 then all the subscripts *aa*, *bb*, *cc, dd, ff, gg, hh, ii, jj, kk, ll*, *mm* and *nn* are zero;
the subscript *ff* is 0 to about 1,000, 1 to about 1000, preferably 0 to about 500, and more preferably 0 to about 200;
the subscript *gg* is 0 to about 400, 1 to about 400, preferably 0 to about 100, and more preferably 0 to about 20 subject to the limitation that the sum of the subscripts *bb*, *ee*, *gg* and *kk* is greater than zero;
the subscript *jj* is 0 to about 50, 1 to about 50, preferably 0 to about 30. and more preferably 0 to about 10;
the subscript *kk* is 0 to about 30, 1 to about 30, preferably 0 to about 10, and more preferably 0 to about 5 subject to the limitation that the sum of
the subscripts *bb, gg* and *kk* is greater than 1;
the subscript *nn* is 0 to about 20, 1 to about 20, preferably 0 to about 10, and more preferably 0 to about 5;
the subscript cc is 0 to about 20, 1 to about 20, preferably 0 to about 10, and more preferably 0 to about 5;
the subscript *hh* is 0 to about 200, 1 to about 200, preferably 0 to about 100, and more preferably 0 to about 50;
the subscript *ll* is 0 to about 30, 1 to about 30, preferably 0 to about 20, and more preferably 0 to about 5;
the subscript *dd* is 0 to about 2;
the subscript *ii* is 0 to about 20, 1 to about 20, preferably 0 to about 15, and more preferably 0 to about 5;
the subscript *mm* is 0 to about 30, 1 to about 30, preferably 0 to about 20, and more preferably 0 to about 5;
the subscript *oo* is zero or one;
the subscript *pp* is 0 to about 100, 1 to about 100, subject to the limitation that (*pp + qq* + *rr*) > 0;
the subscript *qq* is 0 to about 100, 1 to about 100, subject to the limitation that (*pp* + *qq* + *rr*)>0;
the subscript *rr* is 0 to about 100, 1 to about 100, subject to the limitation that (*pp* + *qq* + *rr*) > 0.

Optionally the reaction of compound (I) with compound (II) can be conducted in the presence of compound (III) comprising a polyamine having the formula:

N(R²¹)(R²²)A[N(R²³)(R²⁴)]_{zz}.

where
R²¹, R²², R²³ and R²⁴ are independently chosen from the group consisting of H or a monovalent hydrocarbon radical containing one to about 20 carbon atoms; and
A is selected from a group consisting of a divalent linear or branched hydrocarbon radical consisting of 1 to about 60 carbons or a divalent polydialkyl-siloxane radical, optionally containing S, O or N and the subscript zz is about 1 to about 20.
The result will be a non-crosslinked reaction product of compound (I) with compound (II), and compound (III).
Optionally the reaction of compound (I) with compound (II) can be conducted in the presence of compound (IV) comprising a secondary amine.
Examples of secondary amines are diethanolamine, dimethanolamine, diethylamine, dimethylamine, ethylmethylamine, dipropylamine, diisopropylamiine, dibutylamine, dicyclohexylamine, diphenylamine, piperidine, pyrrolidine phthatimide, 1,1,1,3,5,5,5-heptamethyl-3-(methylaminopropyl)-trisiloxane, Methyl-(3-trimethylsilanyl-propyl)-amine and the like. Polymeric amines may also be used as such.
The result will be a non-crosslinked reaction product of compound (I) with compound (II), and compound (IV).
Optionally the reaction of compound (I) with compound (II) can be conducted in the presence of compound (III) and compound (IV). The result will be a non-crosslinked reaction product of compound (I) with compound (II), compound (III) and compound (IV).

In one embodiment of the present invention is a non-crosslinked reaction product of a polyepoxy-compound with an aminosilane free of alkoxy groups or an aminosilicone as represented in the formula below. 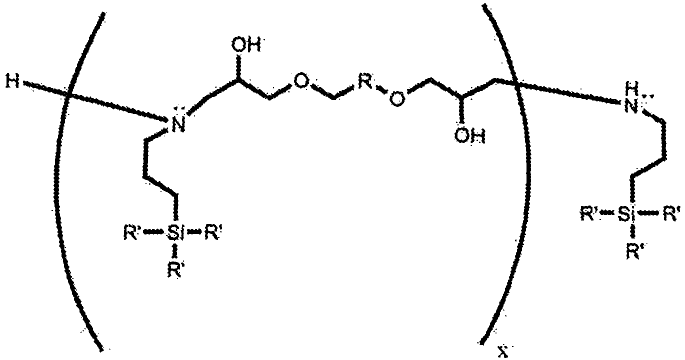 wherein R is a divalent organic or silicone group and R' is a monovalent alkyl or siloxane and x is about 2 to about 1000, preferably x is about 3 to about 100, and more preferably x is about 4 to about 20.
A preferred reaction product of the present invention is shown in the formula below. 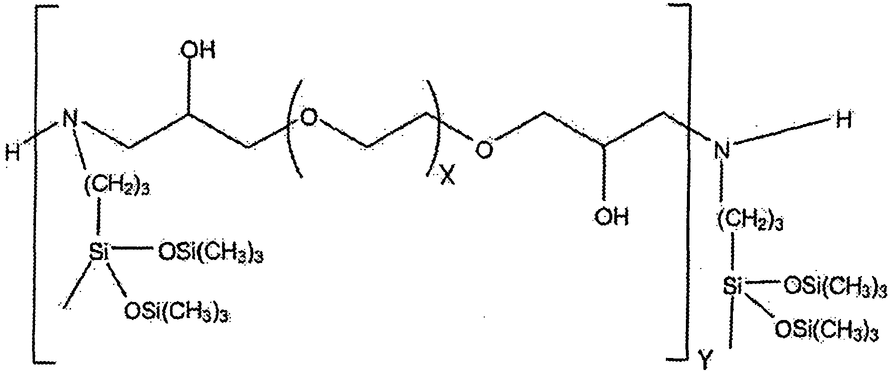 wherein X is about 5 to about 30 and Y is about 2 to about 100, preferably X is about 6 to about 20 and Y is about 4 to about 50, and more preferably X is about 8 to about 15 and Y is about 6 to about 20.
In the specification and claims herein, the following terms and expressions are to be understood as indicated.

The expression "hydrocarbon radicals" means any hydrocarbon group from which one or more hydrogen atoms has been removed and is inclusive of alkyl, alkenyl, alkynyl, cyclic alkyl, cyclic alkenyl, cyclic alkynyl, aryl, aralkyl and arenyl and may contain heteroatoms.

The term "alkyl" means any monovalent, saturated straight, branched or cyclic hydrocarbon group; the term "alkenyl" means any monovalent straight, branched, or cyclic hydrocarbon group containing one or more carbon-carbon double bonds where the site of attachment of the group can be either at a carbon-carbon double bond or elsewhere therein; and, the term "alkynyl" means any monovalent straight, branched, or cyclic hydrocarbon group containing one or more carbon-carbon triple bonds and, optionally, one or more carbon-carbon double bonds, where the site of attachment of the group can be either at a carbon-carbon triple bond, a carbon-carbon double bond or elsewhere therein. Examples of alkyls include methyl, ethyl, propyl and isobutyl. Examples of alkenyls include vinyl, propenyl, allyl, methallyl, ethylidenyl norbornane, ethylidene norbornyl, ethylidenyl norbornene and ethyildene norbornenyl. Examples of alkynyls include acetylenyl, propargyl and methylacetylenyl.

The expressions "cyclic alkyl", "cyclic alkenyl", and "cyclic alkynyl" include bicyclic, tricyclic and higher cyclic structures as well as the aforementioned cyclic structures further substituted with alkyl, alkenyl, and/or alkynyl groups. Representative examples include norbornyl, norbornenyl, ethylnorbornyl, ethylnorbornenyl, cyclohexyl, ethylcyclohexyl, ethylcyclohexenyl, cyclohexylcyclohexyl and cyclododecatrienyl.

The term "aryl" means any monovalent aromatic hydrocarbon group; the term "aralkyl" means any alkyl group (as defined herein) in which one or more hydrogen atoms have been substituted by the same number of like and/or different aryl (as defined herein) groups; and, the term "arenyl" means any aryl group (as defined herein) in which one or more hydrogen atoms have been substituted by the same number of like and/or different alkyl groups (as defined herein), Examples of aryls include phenyl and naphthalenyl. Examples of aralkyls include bennzyl and phenethyl. Examples of arenyls include tolyl and xylyl.

Other than in.the working examples or where otherwise indicated, all numbers expressing amounts of materials, reaction conditions, time durations, quantified properties of materials, and so forth, stated in the specification and claims are to be understood as being modified in all instances by the term "about" whether or not the term "about" is used in the expression.

It will be understood that any numerical range recited herein includes all sub-ranges within that range and any combination of the various endpoints of such ranges or sub-ranges.

It will be further understood that any compound, material or substance which is expressly or implicitly disclosed in the specification and/or recited in a claim as belonging to a group of structurally, compositionally and/or functionally related compounds, materials or substances includes individual representatives of the group and all combinations thereof.

The term "cross-linked polymers" means polymer molecules Which are built from monomers which are linked together at many points other than their ends and as a result molecules with large size form and the material is non-pourable solid or gel-like which cannot be dissolved in any solvent.

The copolymers in our invention are "non-crosslinked", which means that their monomers are either not linked together at points other than their ends or the tinkages between the polymers are so few that the copolymer is either liquid or can be dissolved in at least one solvent.

Reference is made to substances, components, or ingredients in existence at the time just before first contacted, formed *in situ,* blended, or mixed with one or more other substances, components, or ingredients in accordance with the present disclosure. A substance, component or ingredient identified as a reaction product, resulting mixture, or the like may gain an identity, property, or character through a chemical reaction or transformation during the course of contacting, *in situ* formation, blending, or mixing operation if conducted in accordance with this disclosure with the application of common sense and the ordinary skill of one in the relevant art (e.g., chemist). The transformation of chemical reactants or starting materials to chemical products or final materials is a continually evolving process, independent of the speed at which it occurs. Accordingly, as such a transformative process is in progress there may be a mix of starting and final materials, as well as intermediate species that may be, depending on their kinetic lifetime, easy or difficult to detect with current analytical techniques known to those of ordinary skill in the art.

Reactants and components referred to by chemical name or formula in the specification or claims hereof, whether referred to in the singular o.r plural, may be identified as they exist prior to combing into contact with another substance referred to by chemical name or chemical type (e.g., another reactant or a solvent). Preliminary and/or transitional chemical changes, transformations, or reactions, if any, that take place in the resulting mixture, solution, or reaction medium may be identified as intermediate species, master batches, and the like, and may have utility distinct from the utility of the reaction product or final material. Other subsequent changes, transformations, or reactions may result from bringing the specified reactants and/or components together under the conditions called for pursuant to this disclosure. In these other subsequent changes, transformations, or reactions the reactants, ingredients, or the components to be brought together may identify or indicate the reaction product or final material.

In describing the products of the instant invention as a reaction product of initial materials reference is made to the initial species recited and it is to be noted that additional materials may be added to the initial mixture of synthetic precursors. These additional materials may be reactive or non-reactive. The defining characteristic of the instant invention is that the reaction product is obtained from the reaction of at least the components listed as disclosed. Non-reactive components may be added to the reaction mixture as diluents or to impart additional properties unrelated to the properties of the composition prepared as a reaction product. Thus for example finely divided solids such as pigments may be dispersed into the reaction mixture, before during or after reaction to produce a reaction product composition that additionally comprises the non-reactive component, e.g. a pigment. Additional reactive components may also be added; such components may react with the initial reactants or they may react with the reaction product; the phrase "reaction product" is intended to include those possibilities as well as including the addition of non-reactive components.

Other optional ingredients may be added in the compositions of the present invention including coupling agents, e.g., silane coupling agents, curing aids, e.g., including activators, retarders and accelerators, processing additives such as oils, plasticizers, tackifying resins, silicas, other fillers, pigments, fatty acids, zinc oxide, waxes, antioxidants and anti-ozonants, peptizing agents, reinforcing maternal such as, for example, carbon black, and so forth. Such additives are selected based upon the intended use and such selection is within the knowledge of one of skill in the art, as are the required amounts of such additives known to one of skill in the art.

Other embodiments of the invention will be apparent to those skilled in the art from a consideration of this specification or practice of the invention disclosed herein. It is intended that the specification and examples be considered as exemplary only, with the true scope and spirit of the invention being defined by the following claims.

The compositions of the present invention can be used commercially as a demulsifying agents, in agricultural compositions including fertilizers, in cosmetics and personal care products, in household cleaners, in coating compositions such as waxes and the like, in water processing apparatuses as well as other products.

As used herein the term "non-aqueous hydroxylic organic compound" means hydroxyl containing organic compounds exemplified by alcohols, glycols, polyhydric alcohols and polymeric glycols and mixtures thereof that are liquid at room temperature, e.g. about 25 °C, and about one atmosphere pressure. The non-aqueous organic hydroxylic solvents are selected from the group consisting of hydroxyl containing organic compounds comprising alcohols, glycols, polyhydric alcohols and polymeric glycols and mixtures thereof that are liquid at room temperature, e.g. about 25 °C, and about one atmosphere pressure. Preferably the non-aqueous hydroxylic organic solvent is selected from the group consisting of ethylene glycol, ethanol, propyl alcohol, iso-propyl alcohol, propylene glycol, dipropylene glycol, tripropylene glycol, butylene glycol, iso-butylene glycol, methyl propane diol, glycerin, sorbitol, polyethylene glycol, polypropylene glycol mono alkyl ethers, polyoxyalkylene copolymers and mixtures thereof.

### Synthetic Examples::

### Preparation example A:

An epoxy encapped polyether (84.78 g) with the average structure of CH₂(O)CHCH₂O(CH₂CH₂O)_{13.6}CH₂CH(O)CH₂. 3-aminopropyltrimethylsilane (51.72 g) and isopropanol (50.00 g) were combined in a 250 mL round bottom flask. The solution was heated to reflux and stirred with a magnetic stirrer for 18 hrs. The reaction was allowed to remain at reflux until all the epoxy groups were consumed as determined by titration. The resulting material exhibited a dark straw color. The material was transferred to a rotary evaporator and stripped at 70°C and 4 Torr for 2 hrs to remove the isopropanol. A non-crosslinked liquid was obtained with a viscosity of 66,000 cP at ambient temperature.

### Preparation example B:

An epoxy encapped polyether (81.8 g) with the average structure of CH₂(O)CHCH₂O(CH₂CH₂O)_{13.6}CH₂CH(O)CH₂, 3-aminopropyltrimethylsilane (18.2 g) and isopropanol (50.00 g) were combined in a 250 mL round bottom flask. The solution was heated to reflux and stirred with a magnetic stirrer for 18 hrs. The reaction was hallowed to remain at reflux until all the epoxy groups were consumed as determined by titration. The resulting material exhibited a dark straw color. The material was transferred to a rotary evaporator and stripped at 70°C and 4 Torr for 2 hrs to remove the isopropanol. A non-crosslinked liquid was obtained with a viscosity of 8150 cP at ambient temperature.

### Preparation example C:

An epoxy encapped polyether (135.88 g) with the average structure of CH₂(O)CHCH₂O(CH₂CH₂O)_{13.6}CH₂CH(O)CH₂, 3-aminopropyl-1,1,1,3,5,5,5-heptamethyltrisiloxane (64.38 g) and isopropanol (150.00 g) were combined in a 500 mL round bottom flask. The solution was heated to reflux and stirred with a magnetic stirrer for 24 hrs. The reaction was allowed to remain at reflux until all the epoxy groups were consumed as determined by titration. The resulting material exhibited a dark straw color. The material was transferred to a rotary evaporator and stripped at 70°C and 4 Torr for 2 hrs to remove the isopropanol. A non-crosslinked liquid was obtained with a viscosity of 3720 cP at ambient temperature.

### Preparation example D:

An epoxy encapped polyether (62.52 g) with the average structure of CH₂(O)CHCH₂O(CH₂CH₂O)_{13.6}CH₂CH(O)CH₂, 3-aminopropyltris(trimethylsiloxy)silane (37.48 g) and isopropanol (50.00 g) were combined in a 250 mL round bottom flak. The solution was heated to reflux and stirred with a magnetic stirrer for 20 hrs. The reaction was allowed to remain at reflux until al the epoxy groups were consumed as determined by titration. The resulting material exhibited a dark straw color. The material was transferred to a rotary evaporator and stripped at 70°C and 4 Torr for 2 hrs to remove the isopropanol. A non-crosslinked liquid was obtained with a viscosity of 5000 cP at ambient temperature.

### Preparation example E:

An epoxy encapped polyether (67.85 g) with the average structure of CH₂(O)CHCH₂O(CH₂CH₂O)_{13.6}CH₂CH(O)CH₂, 3-aminopropyl-1,1,1,3,5,5,5-heptamethyltrisiloxane (25.72 g), 1,3-bis(aminopropy)-1,1,3,3-tetramethyldisiloxane (1.43 g), diethanolamine (1.21 g) and isopropanol (100.00 g) were combined in a 250 mL round bottom flask. The solution was heated to reflux and stirred with a magnetic stirrer for 24 hrs. The reaction was allowed to remain at reflux Until all the epoxy groups were consumed as determined by titration. The resulting material exhibited a dark straw color. The material was transferred to a rotary evaporator and stripped at 70°C and 4 Torr for 2 hrs to remove the isopropanol. A non-crosslinked liquid was obtained with a viscosity of 6600 cP at ambient temperature.

It will be understood that any numerical range recited herein includes all sub-ranges within that range and any combination of the various endpoints of such ranges or sub-ranges.

It will be further understood that any compound, material or substance which is expressly or implicitly disposed in the specification and/or recited in a claim as belonging to a group of structurally, compositionally and/or functionally related compound, materials or substances includes individual representatives of the group and all combinations thereof.

Other embodiments of the invention will be apparent to those skilled in the art from a consideration of this specification or practice of the invention disclosed herein. It is intended that the specification and examples be considered as exemplary only, with the true scope and spirit of the invention being defined by the following claims.

## Claims

1. A composition comprising the non-crosslinked reaction product of
I) an oxirane or oxetane compound (I) comprising at least two oxirane or oxetane groups;
II) a compound (II) comprising silicon and one or more amino groups; and optionally
III) a polyamine (III); and
IV) a secondary amine (IV).

2. The composition of claim 1 wherein the oxirane or oxetane compound (I) is selected from the group consisting of siloxanes, silanes, hydrocarbons and polyethers particularly where the oxirane or oxetane compound is a siloxane having the formula:
MₐM^{E}_{b}M^{PE}_{c}M^{H}_{d}DₑD^{E}_{f}D^{PE}_{g}D^{H}ₕTᵢT^{E}ⱼT^{PE}ₖT^{H}ₗQₘ with
M = R¹R²R³SiO_{1/2};
M^{H} = R¹R²H SiO_{1/2};
M^{PE} = R¹R²(-CH₂CH(R⁴)(R⁵)ₙO(C₂H₄O)ₒ(C₃H₆O)ₚ(C₄H₈O)_{q}R⁶)SiO_{1/2};
M^{E} = R¹R²(R^{E})SiO_{1/2};
D = R¹R²SiO_{2/2};
D^{H} = R¹HSiO_{2/2};
M^{PE} = R¹(-CH₂CH(R⁴)(R⁵)ₙO(C₂H₄O)ₒ(C₃H₆O)ₚ(C₄H₈O)_{q}R⁶)SiO_{2/2};
D^{E} = R¹R^{E}SiO_{2/2};
T = R¹SiO_{3/2};
T^{H} = HSiO_{3/2};
T^{PE} = (-CH₂CH(R⁴)(R⁵)ₙO(C₂H₄O)ₒ(C₃H₆O)ₚ(C₄H₈O)_{q}R⁶)SiO_{3/2};
T^{E} = R^{E}SiO_{3/2}; and
Q = SiO_{4/2};
where R¹, R² and R³ are each independently selected from the group of monovalent hydrocarbon radicals having from 1 to about 60 carbon atoms;
R⁴ is H or a 1 to about 6 carbon atom containing alkyl group; R⁵ is a divalent alkyl radical of 1 to about 6 carbons; R⁶ is H, a monofunctional hydrocarbon radical of 1 to about 6 carbons, or acetyl;
R^{E} is independently a monovalent hydrocarbon radical containing one or more oxirane or oxetane moieties having from two to about sixty carbon atoms subject to the imitation that the oxtrane or oxetane compound (I) contains at least two oxirane or oxetane groups;
the subscript *a* is 0 to about 20
the subscript *b* is 0 to about 20 subject to the limitation that (b + *f* + *j*) > 0;
the subscript *e* is 0 to about 1,000;
the subscript *f* is 0 to about 400 subject to the limitation that (*b* + *f* +*j*) > 0;
the subscript *i* is 0 to about 50;
the subscript *j* is 0 to about 30 subject to the limitation that (b + *f* + *j*) > 0;
the subscript *m* is 0 to about 20;
the subscript *c* is 0 to about 20;
the subscript *g* is 0 to about 200;
the subscript *k* is 0 to about 30;
the subscript *d* is 0 to about 20;
the subscript *h* is 0 to about 20;
the subscript *l* is 0 to about 30;
the subscript *n* is zero or one;
the subscript *o* is 0 to about. 100 subject to the limitation that (*o* + *p* + *q*) > 0;
the subscript *p* is 0 to about 100 subject to the limitation that (*o* + *p* + *q*) > 0;
the subscript q is 0 to about 100 subject to the limitation that (o + p + q) > 0;
or alternatively where the oxirane or oxetane compound (I) has the formula:
(R⁷)ᵣ(R⁸)ₛ(R⁹)ₜ(R¹⁰)ᵤ
where R⁷ and R¹⁰ are independently a monovalent hydrocarbon radical containing one or more oxirane or oxetane moieties having front about 2 to about 12 carbon atoms;
R⁸ and R⁹ are each selected from the group consisting of H or a linear or branched monovalent hydrocarbon radical of 1 to about 200 carbons; optionally substituted with nitrogen, sulphur and oxygen;
the subscripts r, s, t, and u are independently between zero to about 10 subject to the limitation that (r+ u) ≥ 2
or alternatively where the oxirane or oxetane compound (I) is a polyether having the formula:
R¹²O(C₂H₄O)_{w}(C₃H₆O)ₓ(C₄H₃O)_{y}R¹³
where R¹² and R¹³ are independently a monovalent hydrocarbon radical containing one or more oxirane or oxetane moieties having from 2 to about 12 carbon atoms;
the subscript w is 0 to about 100 subject to the limitation that (w + x + y) > 0;
the subscript x is 0 to about 100 subject to the limitation that (w + x + y) > 0;
the subscript y is 0 to about 100 subject to the limitation that (w + x + y) > 0;
compound (II) comprises silicon and one or more amino groups selected from the group consisting of siloxanes and silanes having the formula:
MₐₐM^{A}_{bb}M^{PE}_{cc}M^{H}_{dd}M^{M}ₑₑD_{ff}D^{A}_{gg}D^{PE}ₕₕD^{H}ᵢᵢTⱼⱼT^{A}ₖₖT^{PE}ₗₗT^{H}ₘₘQₙₙ with
M = R¹⁵R¹⁶R¹⁷SiO_{1/2};
M^{H} = R¹⁵R¹⁶H SiO_{1/2};
M^{PE} = R¹⁵R¹⁶(-CH₂CH(R¹⁸)(R¹⁹)ₒₒO(C₂H₄O)ₚₚ(C₃H₆O)_{qq}(C₄H₈O)ᵣᵣR²⁰)SiO_{1/2};
M^{A}= R¹⁵R¹⁶(R^{A})SiO_{1/2};
M^{M} = R¹⁵R¹⁶R¹⁷R^{A}Si;
D = R¹⁵R¹⁵SiO_{2/2};
D^{H} = R¹⁵HSiO_{2/2};
D^{PE} R¹⁵(-CH₂CH(R¹⁸)(R¹⁹)ₒₒO(C₂H₄O)ₚₚ(C₃H₆O)_{qq}(C₄H₈O)ᵣᵣR²⁰)SiO_{2/2};
D^{A} = R¹⁵R^{A}SiO_{2/2};
T = R¹⁵SiO_{3/2};
T^{H} = HSiO_{3/2};
T^{PE} = (-CH₂CH(R¹⁸)(R¹⁹)ₒₒO(C₂H₄O)ₚₚ(C₃H₆O)_{qq}(C₄H₈O)ᵣᵣR²⁰)SiO_{3/2};
T^{A} = R^{A}SiO_{3/2}; and
Q = SiO_{4/2};
where R¹⁵, R¹⁶ and R¹⁷ are each independently selected from the group of monovalent hydrocarbon radicals having from 1 to about 60 carbon atoms,
R¹⁸ is H or a 1 to about 6 carbon atom alkyl group, R¹⁹ is a divalent hydrocarbon radical of 1 to about 6 carbons, R²⁰ is selected from the group consisting of H, monofunctional hydrocarbon radicals of 1 to about 6 carbons, and acetyl;
R^{A} is independently a monovalent hydrocarbon radical containing one or more amino moieties having from one to about 60 carbon atoms; the subscript *aa* is 0 to about 20;
the subscript *bb* is 0 to about 20 subject to the limitations that the sum of the subscripts *bb, ee, gg* and *kk* is greater than zero;
the subscript *ee* is zero or 1 subject to the limitation that when *ee* is 1 then all the subscripts *aa*, *bb, cc, dd, ff, gg, hh, ii, jj, kk, ll, mm* and *nn* are zero; the subscript *ff* is 0 to about 1,000;
the subscript *gg* is 0 to about 400 subject to the limitation that the sum of the subscripts *bb*, *ee*, *gg* and *kk* is greater than zero;
the subscript *jj* is 0 to about 50;
the subscript *kk* is 0 to about 30 subject to the limitation that the sum of the subscripts *bb*, *gg* and kk is greater than 1;
the subscript *nn* is 0 to about 20;
the subscript *cc* is 0 to about 20;
the subscript *hh* is 0 to about 200;
the subscript *ll* is 0 to about 30;
the subscript *dd* is 0 to about 2;.
the subscript *ii* is 0 to about 20;
the subscript *mm* is 0 to about 30;
the subscript *oo* is zero or one;
the subscript *pp* is 0 to about 100 subject to the limitation that (*pp* + *qq* + *rr*) > 0;
the subscript *qq* is 0 to about 100 subject to the limitation that (*pp* + *qq* + *rr*) > 0;
the subscript *rr* is 0 to about 100 subject to the limitation that (*pp* + *qq* + *rr*) > 0.

3. The composition of claim 2 wherein compound (I) and compound (II) are reacted in the presence of polyamine compound (III) to produce said reaction product, said polyamine compound (III) having the formula:
N(R²¹)(R²²)A[N(R²³)(R²⁴)]_{zz},
where
R²¹, R²², R²³ and R²⁴ are independently chosen from the group consisting of H or a monovalent hydrocarbon radical having 1 to about 20 carbon atoms;
A is selected from a group consisting of a divalent linear or branched hydrocarbon radical having 1 to about 60 carbons or a divalent polydialkyl-siloxane radical, optionally containing S, O or N; and subscript zz is 1 to about 20.

4. The composition of claim 1 comprising a non-crosslinked reaction product of a polyepoxy-compound with an aminosilane free of alkoxy groups or an aminosilicone having the formula: 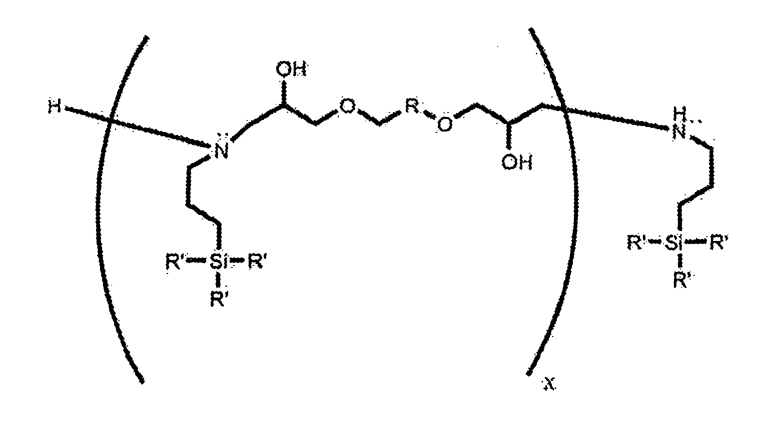 wherein R is a divalent organic or silicone group and R' is a monovalent alkyl or siloxane and x is about 2 to about 1000.

5. The composition of claim 4 wherein x is about 3 to about 100.

6. The composition of claim 4 wherein x is about 4 to about 20.

7. The composition of claim 1 wherein the reaction product has the following formula: 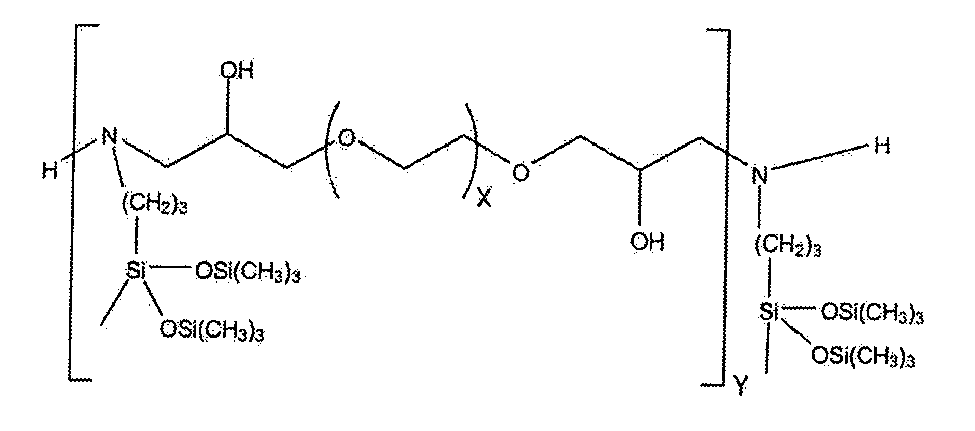 wherein X is about 5 to about 30 and Y is about 2 to about 100.

8. The composition of claim 7 wherein X is about 6 to about 20 and Y is about 4 to about 50.

9. The composition of claim 7 wherein x is about 8 to about 15 and Y is about 6 to about 20.

10. The composition of claim 2 wherein:
the subscript *a* is 0 to about 10;
the subscript *b* is 0 to about 10 subject to the limitation that (b + *f* + *j*) > 0;
the subscript *e* is 0 to about 500;
the subscript *f* is 0 to about 100 subject to the limitation that (b + f + *j*) > 0;
the subscript *i* is 0 to about 10;
the subscript *j* is 0 to about 10 subject to the limitation that (b + *f* + *j*) > 0;
the subscript *m* is 0 to about 10;
the subscript *c* is 0 to about 15;
the subscript *g* is 0 to about 100;
the subscript *k* is 0 to about 20;
the subscript *d* is 0 to about 10;
the subscript *h* is 0 to about 10;
the subscript *l* is 0 to about 10;
the subscript *aa* is 0 to about 10;
the subscript *bb* is 0 to about 10 subject to the limitations that the sum of the subscripts *bb, ee, gg* and *kk* is greater than zero;
the subscript *ff* is 0 to about 500;
the subscript *gg* is 0 to about 100 subject to the limitation that the sum of the subscripts *bb*, *ee, gg* and *kk* is greater than zero;
the subscript *jj* is 0 to about 30;
the subscript *kk* is 0 to about 10 subject to the limitation that the sum of the subscripts *bb, gg* and *kk* is greater than 1;
the subscript *nn* is 0 to about 10;
the subscript *cc* is 0 to about 10;
the subscript *hh* is 0 to about 100;
the subscript *ll* is 0 to about 20;
the subscript *ii* is 0 to about 15;and
the subscript *mm* is 0 to about 20.

11. The composition of claim 2 wherein;
the subscript a is 0 to about 5;
the subscript *b* is 0 to about 3 subject to the limitation that (b + *f* + *j*) > 0;
the subscript *e* is 0 to about 200;
the subscript *f* is 0 to about 20 subject to the limitation that (b + *f* + *j*) > 0;
the subscript *i* is 0 to about 5;
the subscript *j* is 0 to about 5 subject to the limitation that (b + *f* + *j*) > 0;
the subscript *m* is 0 to about 7.5;
the subscript *c* is 0 to about 10;
the subscript *g* is 0 to about 50;
the subscript *k* is 0 to about 10;
the subscript *d* is 0 to about 3;
the subscript *h* is 0 to about 3;
the subscript *l* is 0 to about 3;
the subscript *aa* is 0 to about 5;
the subscript *bb* is 0 to about 5 subject to the limitations that the sum of the subscripts *bb*, ee, *gg* and *kk* is greater than zero;
the subscript *ff* is 0 to about 200;
the subscript *gg* is 0 to about 20 subject to the limitation that the sum of the subscripts *bb, ee, gg* and *kk* is greater than zero;
the subscript *jj* is 0 to about 10:
the subscript *kk* is 0 to about 5 subject to the limitation that the sum of the subscript *bb*, *gg* and *kk* is greater than 1;
the subscript *nn* is 0 to about 5;
the subscript *cc* is 0 to about 5;
the subscript *hh* is 0 to about 50;
the subscript *ll* is 0 to about 5;
the subscript *ii* is 0 to about 5; and
the subscript *mm* is 0. to about 5.
